# EUROPEAN PATENT APPLICATION

(11) **EP 2 312 730 A1**
(43) Date of publication of application: **20.04.2011**
(21) Application number: 09173420.2
(22) Date of filing: 19.10.2009
(51) Int. Cl.: H02K 5/22

(54) **Bushing Arrangement of an Electrical Generator**

(71) Applicant: Alstom Technology Ltd, 5400 Baden (CH)
(72) Inventor: Not-Curdin, Fried, 5210, Windisch (CH); Arndt, Andre, 5242, Lupfig (CH); Safari, Hossein, 5504, Othmarsingen (CH)

(57) **Abstract**

The invention refers to a bushing arrangement of an electric generator (1). The generator (1) comprises a casing (2) enclosing a stator (3) having more than three stator phases (4) and a rotor (5). Each stator phase is connected to at least a bushing (7) that comes out from the casing (2). The total number of bushings (7) is greater than six, and the bushings (7) extend from the casing (2) radially or along an axis parallel to a radial axis (8) of the generator (1).

## Description

### TECHNICAL FIELD

The present invention relates to a bushing arrangement of an electric generator.

In particular the present invention refers to an arrangement for connecting the phases of an electric generator to further components outside of the casing of the generator.

### BACKGROUND OF THE INVENTION

Generators are known to comprise a sealed casing that contains air or H₂ and houses a stator and a rotor.

The stator has windings, whose ends are rooted trough the casing via bushings.

Traditional generators used for electric power generation have usually three-phase windings with six ends (two for each phase) connected to six bushings to make the necessary connections outside of the casing.

Thus traditional generators are provided with six bushings.

Nevertheless, new methods for generating three-phase electric power comprise polyphase generators with stator windings that define a plurality of phases (more than three) connected to a converter via controllable switches; for example EP 1 199 794 discloses a method using a polyphase generator of this type.

With these new methods, traditional bushing arrangements cannot be used anymore, because of the different generator concept (that uses a converter) and, thus, the very large bushing number that is required when compared to traditional generators.

### SUMMARY OF THE INVENTION

The technical aim of the present invention is therefore to provide a bushing arrangement of an electric generator by which the said problems of the known art are eliminated.

In particular, an object of the invention is to provide a bushing arrangement to be implemented on the generator casing.

A further object of the invention is to provide a bushing arrangement that lets the large number of phases of a polyphase generator be connected to components outside of the casing.

This technical aim is attained according to the invention by providing an arrangement in accordance with the accompanying claims.

### BRIEF DESCRIPTION OF THE DRAWINGS

Further characteristics and advantages of the invention will be more apparent from the description of a preferred but non-exclusive embodiment of the arrangement according to the invention, illustrated by way of nonlimiting example in the accompanying drawings, in which:
Figures 1-8 are perspective views of eight different embodiments of the arrangement according to the invention; and
Figure 9 is a partial schematic cross section of a generator having a bushing arrangement according to the invention.

### DETAILED DESCRIPTION OF THE INVENTION

With reference to the figures, these show different embodiments of generators having different arrangements of bushings.

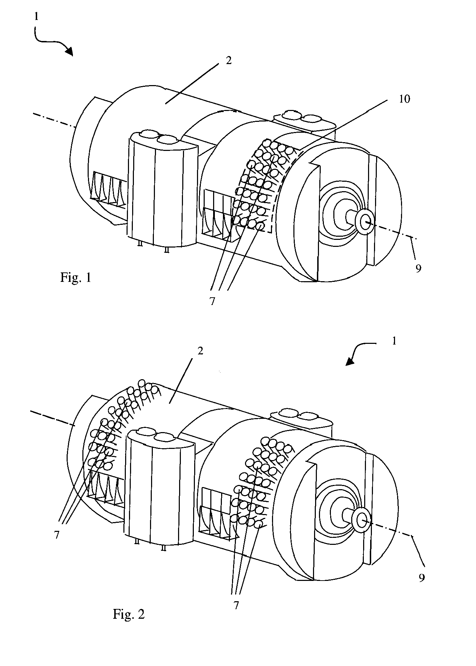

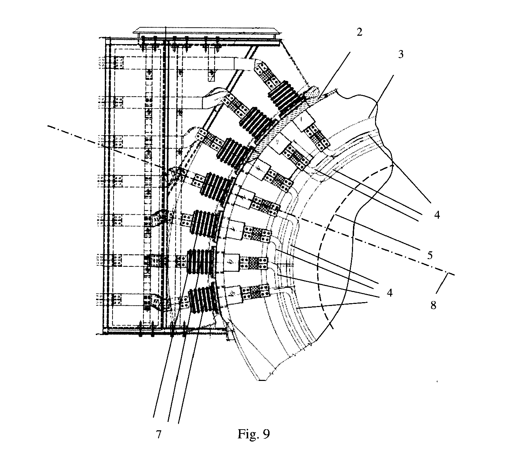

With particular reference to figures 1 and 9, the generator 1 has a casing 2 that encloses a stator 3 with windings that define more than three stator phases 4 and a rotor 5.

Each stator phase 4 is connected to two bushings 7 that come out from the casing 2.

The total number of bushings 7 is greater than six and, in particular, they can be in different embodiments nine, twelve, fifteen or more.

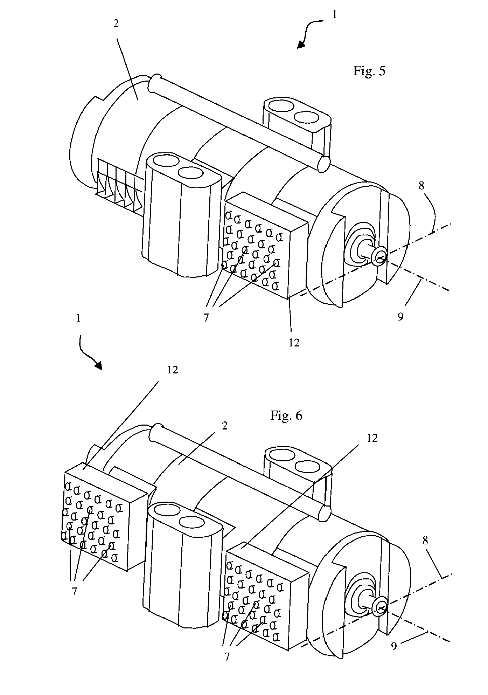

In addition, the bushings 7 extend from the casing 2 radially (figures 1, 2, 3, 4, 9) or along axes parallel to a radial axis 8 of the generator 1 (figures 5, 6, 7, 8); the radial axes 8 of the generator are perpendicular to the generator axis 9.

Advantageously, the bushings 7 are perpendicular to the casing surface from which they protrude.

In particular, according to figure 1 the bushings 7 are arranged along one circumferential section 10 of the casing 2.

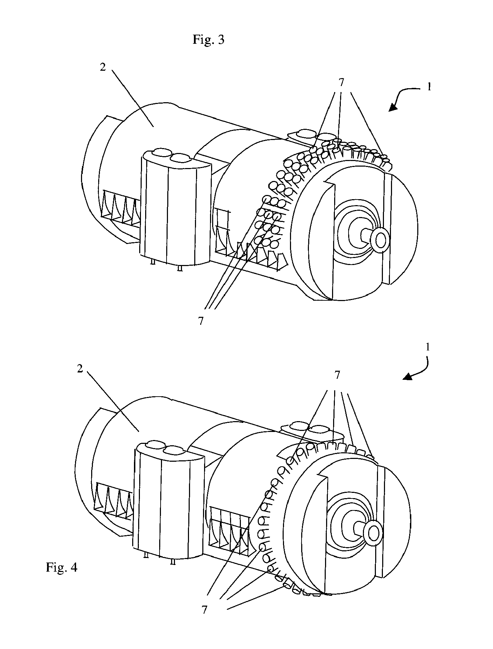

Figure 3 shows a different embodiment with the bushings 7 arranged along a half-circumference of the casing 2.

The further embodiment of figure 4 has the bushings 7 arranged along a whole circumference of the casing 2.

In different embodiments, the bushings 7 are arranged on protruding portions 12 with plane surfaces of the casing 2, such that the bushings 7 are preferably arranged on the plane surfaces.

In the embodiment of figure 5 a protruding portion 12 extending from a side zone of the casing 2 is shown.

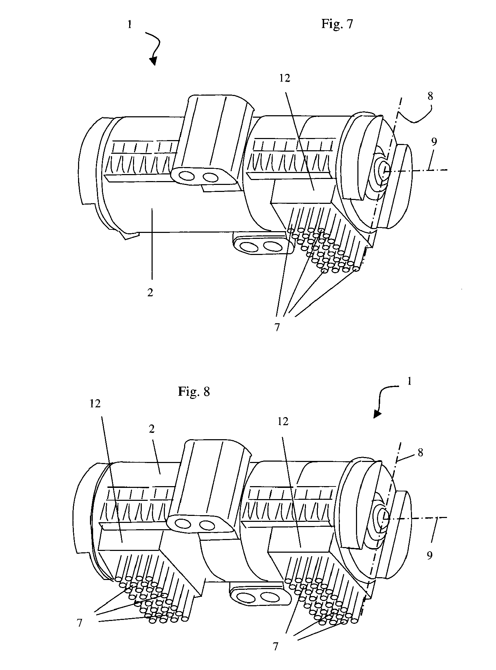

Figure 7 shows an embodiment with the protruding portion 12 that extends from a bottom zone of the casing 2.

Still further embodiments have the bushings 7 arranged in groups at opposite zones of the casing.

In particular the bushings 7 are arranged in two groups at opposite axial zones of the casing 2.

In this respect figure 2 shows a generator 1 with bushings 7 arranged in two groups and projecting from the casing 2 at opposite axial zones.

In this embodiment the two groups of bushings 7 comprise a different number of bushings.

Figure 6 shows an embodiment of a generator 1 having two protruding portions 12 (carrying the bushings 7) extending from opposite axial side zones of the casing 2 and figure 8 shows an embodiment of a generator 1 with two protruding portions 12 extending from opposite axial bottom zones of the casing 2.

The bushings 7 are then connected for example to a matrix converter via controllable bi-directional switches (not shown).

Some embodiments of the invention have been described, but it is clear that the features described may also be independently provided.

The arrangement conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

1 generator
2 casing
3 stator
4 stator phases
5 rotor
7 bushings
8 radial axis
9 generator axis
10 circumferential section
12 support

## Claims

1. Bushing arrangement of an electric generator (1), the generator (1) comprising a casing (2) enclosing a stator (3) having more than three stator phases (4) and a rotor (5), wherein each stator phase is connected to at least a bushing (7) that comes out from the casing (2), **characterised in that** the total number of bushings (7) is greater than six, and **in that** the bushings (7) extend from the casing (2) radially or along axes parallel to a radial axis (8) of the generator (1).

2. Arrangement as claimed in claim 1, **characterised in that** the bushings (7) are perpendicular to the casing surface from which they protrude.

3. Arrangement as claimed in claim 1, **characterised in that** each stator phase (4) is connected to two bushings (7).

4. Arrangement as claimed in claim 1, **characterised in that** the bushings (7) are arranged along one circumferential section (10) of the casing (2).

5. Arrangement as claimed in claim 1, **characterised in that** the bushings (7) are arranged along a half-circumference of the casing (2).

6. Arrangement as claimed in claim 1, **characterised in that** said bushings are arranged along a whole circumference of the casing (2).

7. Arrangement as claimed in claim 1, **characterised in that** the bushings (7) are arranged on at least a protruding portion (12) of the casing (2).

8. Arrangement as claimed in claim 7, **characterised in that** the at least a protruding portion (12) has at least a plane surface and the bushings (7) are arranged on the at least a plane surface.

9. Arrangement as claimed in claim 7, **characterised in that** said at least a protruding portion (12) extends from at least a side zone of the casing (2).

10. Arrangement as claimed in claim 7, **characterised in that** said at least a protruding portion (12) extends from a bottom zone of the casing (2).

11. Arrangement as claimed in claim 1 or 7, **characterised in that** said bushings (7) are arranged in at least two separate groups.

12. Arrangement as claimed in claim 11, **characterised in that** said groups of bushings (7) are arranged at opposite zones of the casing (2).

13. Arrangement as claimed in claim 12, **characterised in that** the opposite zones of the casing (2) where the groups of bushings (7) are connected are opposite axial zones.

14. Arrangement as claimed in claim 11, **characterised in that** the casing has two protruding portions (12).

15. Arrangement as claimed in claim 11, **characterised in that** the groups of bushings (7) comprise a different number of bushings (7).
